# EUROPÄISCHE PATENTSCHRIFT

(11) **EP 2 742 794 B1**
(45) Veröffentlichungstag und Bekanntmachung des Hinweises auf die Patenterteilung: **21.03.2018**
(21) Anmeldenummer: 13184913.5
(22) Anmeldetag: 18.09.2013
(51) Int. Cl.: A01D 90/04

(54) **Landwirtschaftliche Erntemaschine und Verfahren zum Warten einer solchen Erntemaschine**
Agricultural harvesting machine and method for servicing such a harvesting machine
Machine de récolte agricole et procédé de maintenance d'une telle machine de récolte

(30) Priorität: 12.12.2012 DE 102012112154
(43) Veröffentlichungstag der Anmeldung: 18.06.2014
(73) Patentinhaber: Usines Claas France S.A.S, 57140 Metz (FR)
(72) Erfinder: Scharf, Thorsten, 66693 Mettlach (DE); Obellianne, Steve, 57000 Metz (FR); Waechter, Julien, 57640 Failly (FR); Altmayer, Marc, 57320 Alging (FR); Hesselmann, Ulrich, 54439 Saarburg (DE)
(74) Vertreter: Budach, Steffen

(56) Entgegenhaltungen:
- DE-A1- 19 717 542
- DE-A1- 19 841 598
- DE-A1-102005 054 429
- DE-U1- 9 308 656
- US-A1- 2008 028 737

## Beschreibung

Die Erfindung betrifft eine landwirtschaftliche Erntemaschine sowie ein Verfahren zum Warten einer Erntemaschine.

Landwirtschaftliche Erntemaschinen wie Ballenpressen oder Ladewagen sind oftmals mit einer Schneideinrichtung - auch "Schneidwerk" genannt - für der Maschine zugeführtes Halm- und/oder Blattgut (im Folgenden allgemein: "Erntegut") ausgestattet, um dieses zu unterschiedlichen Zwecken zu zerkleinern. Auch andere landwirtschaftliche Erntemaschinen können mit einer solchen Schneideinrichtung ausgestattet sein.

Die Schneideinrichtung ist dabei jeweils in einem vom Erntegut durchströmten Erntegutkanal der Erntemaschine so angeordnet, dass das Erntegut auf eine in den Erntegutkanal hineinragende Vielzahl stehender Messer zu gefördert wird, um in Kontakt mit deren Messerkanten geschnitten zu werden. Eine derartige Schneideinrichtung ist beispielsweise aus der US20080028737A bekannt. Die Messer werden dabei von unten durch längliche Ausnehmungen ("Messerschlitze") in einem Bodenblech in den Erntegutkanal gestellt, d.h. sie ragen durch das Bodenblech hindurch in den Erntegutkanal hinein. Das Bodenblech begrenzt den Erntegutkanal dabei nach unten. Statt eines Bodenblechs kann es sich auch um ein vergleichbares anderes Gutleitelement handeln, durch das die Messer in den Erntegutkanal hineinragen.

Um die Messer insgesamt aus dem Wirkungsbereich des Erntegutkanals beispielsweise zur Reinigung, Wartung oder zum Austausch heraus bewegen zu können, sind diese an einem Messerträger angeordnet, der mittels eines Stellglieds zwischen einer Eingriffsposition (Schneidbetrieb) und einer Öffnungsposition (Zugänglichkeit für Reinigung, Wartung, Austausch) bewegbar ist, in der sämtliche Messer aus dem Erntegutkanal zurückgezogen sind. Der Messerträger ist hierzu beispielsweise schwenkbeweglich gegenüber einem Maschinenrahmen der Erntemaschine gelagert.

Im Fall von Ballenpressen und Ladewagen wird die Förderung des Ernteguts im Wirkungsbereich der Messer insbesondere durch einen Rotor bewirkt, der sich um eine quer zur Gutstromrichtung liegende Achse dreht und in Axialrichtung mit einer Vielzahl von Rotorsternen ausgestattet ist. Die Rotorsterne sind in der Regel leicht verdreht zueinander auf der Achse montiert, um eine weitestgehend kontinuierliche Förderung des Ernteguts sowie gleichmäßige Belastung des zugehörigen Antriebsstrangs zu erzielen. Die Spitzen der (aktiven) Messer befinden sich dabei jeweils zwischen zwei benachbarten Rotorsternen, so dass durch kämmenden Eingriff des Rotors mit den Messern die Zerkleinerung des Ernteguts erfolgt.

In Bezug auf den durchströmten Erntegutkanal weisen die Schneideinrichtungen eine Vielzahl in Reihe nebeneinander angeordneter Messer auf, wobei die Anzahl nebeneinander in den Erntegutkanal ragender Messer die Anzahl wirksamer Schnittkanten und damit eine erzielbare Schnittlänge des Ernteguts vorgibt. Es ist allgemein wünschenswert, unterschiedliche Messeranzahlen verwenden zu können, um sich dem jeweiligen Einsatzzweck bzw. den Erntebedingungen anzupassen. Zum Schutz der Messer vor Beschädigungen durch Steine oder sonstige allgemein nicht zerkleinerbare Partikel, zu Wartungs- und Reparaturzwecken sowie zur Ermöglichung einer Auswahl einer gewünschten Messeranzahl ist es üblich, die Messer derart beweglich gegenüber dem Messerträger der Schneideinrichtung zu lagern, dass sich jedes Messer zwischen zumindest einer aktiven Stellung und einer passiven Stellung verstellen lässt.

Im deaktivierten Zustand befindet sich das Messer in einer Stellung, in der es aus dem Erntegutkanal zurückgezogen ist, das Erntegut also nicht schneidet. Die Form der Messerschneide entspricht dabei zweckmäßigerweise etwa der Geometrie des Bodenblechs, um in der Außerbetriebsposition des Messers die längliche Ausnehmung ("Messerschlitz") im Bodenblech möglichst auszufüllen und annähernd flächenbündig zu verschließen. Die Schneidkante ist damit praktisch unwirksam und wird so auch nicht stumpf.

Im aktiven Zustand befindet sich das Messer dagegen in einer Stellung, in der es so in den Erntegutkanal hineinragt, dass vorbeiströmendes Erntegut in Zusammenwirkung mit dessen Schneidkante zerkleinert wird. Es ist bekannt, die Aktivierung bzw. Passivierung der Messer mittels einer geeigneten Aktorik wie beispielsweise mit hydraulischen Stellzylindern durchzuführen.

Treten während des Erntebetriebs im Bereich der Schneideinrichtung Verstopfungen durch Erntegut auf oder sollen verschleißbedingt Messer ausgetauscht werden, so ist es erforderlich, sich Zugang zu den Messern bzw. zum Erntegutkanal zu verschaffen. Bei aus dem Stand der Technik bekannten Maschinen kann sich der Maschinenbediener bei den dazu erforderlichen Verstellmaßnahmen an der Maschine leicht verletzen oder die Maschine beschädigen. Zudem erfordert die Bedienung (einerseits Messerverstellung, andererseits Verstellung des Messerträgers) gute Maschinenkenntnis, um den Vorgang zügig und mit Erfolg abzuschließen.

Es ist eine Aufgabe der vorliegenden Erfindung, eine Erntemaschine der eingangs genannten Art anzugeben, die hinsichtlich Wartungs-, Reinigungs-, Reparatur- und Austauscharbeiten an der Schneideinrichtung und/oder am betreffenden Abschnitt des Erntegutkanals komfortabel und sicher zu bedienen ist. Ein entsprechendes Verfahren soll angegeben werden.

Die Aufgabe wird gelöst durch eine Erntemaschine mit den Merkmalen des Anspruchs 1. Diese zeichnet sich aus durch eine Steuereinrichtung, die betreibbar ist, den zumindest einen Aktor und das zumindest eine Stellglied im Rahmen eines automatischen Betriebsmodus so anzusteuern, dass die Schneideinrichtung selbsttätig aus einem Betriebszustand in einen Wartungszustand oder umgekehrt bringbar ist. Dabei zeichnet sich der Betriebszustand dadurch aus, dass sich der Messerträger in dessen Eingriffsposition befindet, so dass aktive Messer in den Erntegutkanal hineinragen. Der Wartungszustand zeichnet sich dadurch aus, dass sich der Messerträger in einer Öffnungsposition befindet, in welcher sämtliche Messer - d.h. auch die aktiven Messer - aus dem Erntegutkanal zurückgezogen und für Wartungs-, Austausch- und Reinigungszwecke zugänglich sind. Erfindungsgemäß sorgt somit die Steuereinrichtung durch eine kombinierte Ansteuerung der Aktorik der Messer und des Stellglieds des Messerträgers dafür, die Schneideinrichtung in den jeweils gewünschten Zustand (Betrieb oder Wartung) zu bringen. Der Maschinenbediener ist von der einzelnen Betätigung und Überwachung dieser Verstellvorgänge entlastet. Zweckmäßigerweise führt die Steuereinrichtung dabei eine Programmautomatik aus, durch welche beispielsweise eine zeitliche Abfolge der Ansteuerung der Aktorik und/oder die Einhaltung bestimmter Randbedingungen vorgebbar ist. Im Ergebnis wird eine sichere und komfortable Bedienung der Erntemaschine gewährleistet.

Vorteilhaft ist der Steuereinrichtung eine an der Erntemaschine angeordnete, für einen neben der Erntemaschine stehenden Maschinenbediener zugängliche Bedieneinrichtung zugeordnet. Mittels der Bedieneinrichtung, die mit der Steuereinrichtung in Signalverbindung steht, kann der Maschinenbediener also eine Verstellung der Schneideinrichtung vom Betriebszustand in den Wartungszustand oder umgekehrt auslösen. Durch die Anordnung an der Erntemaschine lässt sich die Bedieneinrichtung von einem neben der Erntemaschine stehenden Bediener einfach erreichen, so dass der jeweilige Verstellvorgang unter direkter Sichtkontrolle des Bedieners stattfinden kann. Die Bedieneinrichtung ist dazu zweckmäßig in der Nähe der Schneideinrichtung angeordnet. In weiterhin vorteilhafter Ausgestaltung könnte es sich bei der Bedieneinrichtung um ein drahtlos mit der Steuereinrichtung kommunizierendes mobiles Gerät wie beispielsweise eine Funkfernbedienung, ein Mobiltelefon ("Smartphone") oder einen Tablet-PC handeln, wodurch der Maschinenbediener den Vorgang - ggf. in gewissen Grenzen - ortsunabhängig bedienen könnte.

In vorteilhafter Weise verfügt die Steuereinrichtung über eine Sicherheitsschaltung zum Schutz des Maschinenbedieners, derart, dass eine Betätigung eines Aktors oder des Stellglieds nur bei ausgeschaltetem Antrieb, insbesondere bei stehender Antriebswelle der Erntemaschine möglich ist. Zur Erfassung des Antriebszustands kann die Steuereinrichtung beispielsweise mit einem Drehzahlsensor der Antriebswelle der Erntemaschine verbunden sein.

Auf weiterhin vorteilhafte Weise kann die Bedieneinrichtung über eine Sicherheitsschaltung zum Schutz des Maschinenbedieners verfügen, derart, dass eine Betätigung eines Aktors oder Stellglieds nur bei beidhändiger Berührung der Bedieneinrichtung durch den Maschinenbediener möglich ist. Verschiedenste Gestaltungen einer solchen Sicherheitsmaßnahme sind denkbar, wobei eine vorteilhafte Maßnahme darin bestehen kann, anhand zweier gleichzeitig zu betätigender, jedoch ausreichend voneinander beabstandeter (mehr als eine Handlänge) Druckschalter eine beidhändige Bedienung zu erzwingen. So wird wirksam verhindert, dass sich ein Maschinenbediener an bewegenden Maschinenteilen verletzt.

Eine konstruktiv vorteilhafte Ausgestaltung der Erntemaschine sieht vor, dass der Messerträger von einem Tragrahmen gehalten wird, der um eine quer zum Erntegutkanal verlaufende Achse schwenkbar gegenüber einem Maschinenrahmen der Erntemaschine gelagert ist, um zwischen der Eingriffsposition und der Öffnungsposition beweglich zu sein. Der Messerträger ist damit mittels des schwenkbaren Tragrahmens in Bezug auf den Erntegutkanal verschwenkbar. Die Verschwenkbarkeit dient vorteilhaft dazu, den Messerträger aus einer den Erntegutkanal abschließenden Eingriffsposition (geschlossener Erntegutkanal, aktive Messer ragen in den Erntegutkanal hinein) in eine Öffnungsposition (Wartung) verbringen zu können, in welcher der Erntegutkanal zumindest teilweise geöffnet und damit zu Wartungs- bzw. Reparaturzwecken zugänglich ist. Wie sich gemäß einer nachfolgend erläuterten Ausgestaltung der Erfindung zeigen wird, unterscheidet sich die Eingriffsposition von der Öffnungsposition vorzugsweise noch darin, dass in der Eingriffsposition der Messerträger seitlich von den Wänden des Erntegutkanals in der Bewegung gehindert ist, während in der Öffnungsposition der Messerträger aus seiner mittigen Position in seitliche Positionen bewegbar ist.

Vorteilhaft ist demnach der Messerträger in einer sich quer zum Erntegutkanal erstreckenden Richtung linear beweglich gegenüber dem Tragrahmen gelagert ist, so dass der Messerträger (in der Öffnungsposition) im Sinne einer Schublade aus einer bezogen auf den Erntegutkanal mittigen Position in zumindest eine seitliche Position bewegbar ist, in welcher der Messerträger zumindest zur Hälfte aus dem Erntegutkanal hinausragt. Durch die seitlich bewegbare Lagerung ist gewährleistet, dass der Messerträger zum Zweck der Wartung und/oder Reparatur einzelner Messer (oder zugehöriger Stellmechanik) durch seitliche Verschiebung nach rechts und/oder links der Erntemaschine vollständig aus dem unzugänglichen Einbaubereich unterhalb des Erntegutkanals herausbewegt werden kann. Beispielsweise ragt dabei durch eine Verschiebung nach rechts mehr als die Hälfte des rechten Teils des Messerträgers aus dem Kanal hervor, durch eine Verschiebung nach links mehr als die Hälfte des linken Teils des Messerträgers. In der mittigen Position befindet sich der Messerträger in einer bezogen auf den Erntegutkanal zentralen Stellung, die auch im Betrieb einzunehmen ist, um die volle Wirksamkeit der Schneideinrichtung zu erzielen. Durch eine beidseitige, jeweils teilweise Ausziehbarkeit besteht nur ein geringer seitlicher Platzbedarf beim Messerwechsel und im ausgezogenen Zustand sind von einer - wie auch immer gestalteten - Haltestruktur keine übermäßig hohen Haltekräfte aufzubringen.

Insbesondere bei einer seitlich verschiebbaren, schubladenartigen Lagerung des Messerträgers am Tragrahmen ist es zur Erfüllung der erfindungsgemäßen Effekte von Vorteil, dass dem Messerträger ein Positionssensor zugeordnet ist, der mit der Steuereinrichtung signalverbunden ist, damit die Steuereinrichtung eine Betätigung eines Aktors oder Stellglieds nur ermöglicht, wenn der Messerträger die mittige Position einnimmt, d.h. die "Schublade" mit dem Messerträger geschlossen ist. So wird wirksam verhindert, dass bei seitlich ausgezogener Schublade durch die Bewegung des Messerträgers in die Eingriffsposition eine Beschädigung an der Maschine (durch den herausragenden Messerträger) auftritt.

Konstruktiv zweckmäßig ist der Schneideinrichtung ein den Erntegutkanal nach unten gegenüber dem Messerträger abdeckendes Gutleitelement, insbesondere ein Bodenblech zugeordnet, in dem eine Vielzahl schlitzartiger Ausnehmungen für die am Messerträger angeordneten Messer ausgebildet ist. Es handelt sich bei dem Gutleitelement insbesondere um ein Bodenblech, das den Erntegutkanal nach unten gegenüber dem Messerträger begrenzt, um das Erntegut zu leiten und den Messerträger vor Verschmutzungen durch Erntegut zu schützen.

Gemäß einer bevorzugten Weiterbildung der Erntemaschine ist das Bodenblech um eine quer zum Erntegutkanal verlaufende Achse schwenkbar gegenüber dem Maschinenrahmen der Erntemaschine gelagert. Die Schwenkbarkeit des Bodenblechs ermöglicht, dass in einer geschlossenen Stellung des Bodenblechs der Erntegutkanal nach unten geschlossen ist. In einer geöffneten Stellung des Bodenblechs ist der Erntegutkanal dagegen nach unten zumindest teilweise geöffnet, so dass der Erntegutkanal, insbesondere ein darin befindlicher Schneidrotor zu Wartungs- und Reparaturzwecken zugänglich ist.

Eine vorteilhafte Weiterbildung der Erntemaschine sieht vor, dass das Bodenblech und der Tragrahmen um die gleiche, insbesondere quer zum Erntegutkanal verlaufende Achse schwenkbar gegenüber dem Maschinenrahmen der Erntemaschine gelagert sind. Durch eine solche Lagerung ist es möglich, den Tragrahmen mit daran gehaltenem Messerträger um die gleiche Achse wie das Bodenblech zu verschwenken. Es kann vorgesehen sein, dass das Bodenblech und der Tragrahmen des Messerträgers miteinander verbindbar sind, so dass je nach Bedarf ein gemeinsames Verschwenken als eine Einheit oder ein separates Verschwenken möglich ist.

Wie zuvor ausgeführt, ist die Steuereinrichtung erfindungsgemäß in einem automatischen Betriebsmodus betreibbar. Vorteilhaft kann zusätzlich vorgesehen sein, dass die Steuereinrichtung in einem manuellen Betriebsmodus betreibbar ist, in welchem der zumindest eine Aktor und/oder das Stellglied über eine Bedieneinrichtung einzeln betätigbar sind. Ein derartiger manueller Betriebsmodus lässt demnach - falls gewünscht - ein vom Bediener frei steuerbares Verstellen der Messer und des Messerträgers zu, was in speziellen Situationen vor Vorteil sein kann.

Die Erfindung betrifft weiterhin eine Kombination aus einem Zugfahrzeug und einer von diesem gezogenen Erntemaschine gemäß der zuvor beschriebenen Art. Dabei ist der Steuerungseinrichtung der Erntemaschine zusätzlich eine im Zugfahrzeug angeordnete, für einen das Zugfahrzeug bedienenden Maschinenbediener zugängliche Bedieneinrichtung zugeordnet. Auf diese Weise ist eine weitere komfortable Möglichkeit der Bedienung der Steuereinrichtung vom Zugfahrzeug aus geschaffen.

Zur Vermeidung sicherheitsgefährdender Konflikte ist vorteilhaft die Vergabe von Zugriffsrechten der an der Erntemaschine angeordneten Bedieneinrichtung auf die Steuereinrichtung und der am Zugfahrzeug angeordneten Bedieneinrichtung auf die Steuereinrichtung vom Antriebszustand der Erntemaschine, insbesondere deren Antriebswelle, abhängig. Eine vorteilhafte Ausgestaltung sieht demnach vor, dass bei abgeschaltetem Antrieb der Erntemaschine die an der Erntemaschine angeordnete Bedieneinrichtung Vorrang gegenüber der am Zugfahrzeug angeordneten Bedieneinrichtung hat, während bei angeschaltetem Antrieb der Erntemaschine die am Zugfahrzeug angeordnete Bedieneinrichtung Vorrang gegenüber der an der Erntemaschine angeordneten Bedieneinrichtung hat. Auf diese Weise ist sichergestellt, dass bei sich drehender Antriebswelle die Bedienung nur vom Zugfahrzeug erfolgen kann, um Verletzungen durch bewegte Bauteile zu vermeiden. Bei stehendem Antrieb ist wiederum eine Bedienung von der Erntemaschine aus bevorzugt.

Die zuvor genannte Aufgabe wird weiterhin gelöst durch ein Verfahren zum Warten einer wie zuvor beschriebenen landwirtschaftlichen Erntemaschine mit den Merkmalen des Anspruchs 14. Dabei wird erfindungsgemäß die Schneideinrichtung aus einem Betriebszustand in einen Wartungszustand gebracht, indem zunächst sämtliche Messer aktiviert werden, dann der Messerträger bei aktivierten Messern in einen Öffnungszustand bewegt wird, und dann die Messer deaktiviert werden. Das erfindungsgemäße Verfahren bietet - neben der vorzugsweise automatisierten Ausführung dieser Verfahrensschritte im Rahmen eines automatischen Betriebsmodus - den Vorteil, dass durch die zuerst stattfindende Aktivierung der Messer eine automatische Reinigung von im Bodenblech ausgebildeten Messerschlitzen durchgeführt wird, da sämtliche Messer mit deren Aktivierung ihre jeweiligen Messerschlitze freistoßen. Durch das anschließende Bewegen des Messerträgers in den Öffnungszustand - bei aktiven Messern - wird auf weiterhin vorteilhafte Weise erreicht, dass die damit aus den Messerschlitzen herausgezogenen Messer weitere Verschmutzungen, die sich während des Betriebs im Bereich der Messerschlitze angesammelt haben, herausziehen. Die beschriebene Programmabfolge (Messeraktiveren, Bewegung des Messerträgers bei aktiven Messern in den Öffnungszustand) bewirkt damit gleich auch eine besonders komfortable Reinigung der Messerschlitze und Messer, so dass ein üblicherweise nach Öffnen des Messerträgers erforderlicher Reinigungsvorgang, insbesondere der Messerschlitze, deutlich weniger mühsam ist.

In umgekehrter Weise werden - nach durchgeführter Wartung, Reinigung und/oder Messertausch - zum Verbringen der Schneideinrichtung aus dem Wartungszustand in den Betriebszustand vorteilhaft die Messer aktiviert und wird dann der Messerträger wieder in den Eingriffszustand bewegt. Der Betrieb der Erntemaschine kann dann fortgesetzt werden.

Die Erfindung wird nachfolgend anhand von vier Figuren näher erläutert. Darin zeigen:
- Fig. 1: eine von einem Traktor gezogene Ballenpresse in schematischer Seitenansicht,
- Fig. 2: eine Schneideinrichtung der Ballenpresse bei geschlossenem Tragrahmen in perspektivischer Ansicht,
- Fig. 3: die Schneideinrichtung der Fig. 2 bei geöffnetem Tragrahmen in perspektivischer Ansicht,
- Fig. 4: die Schneideinrichtung der Fig. 3, wobei der Messerträger in eine linke Position bewegt wurde.

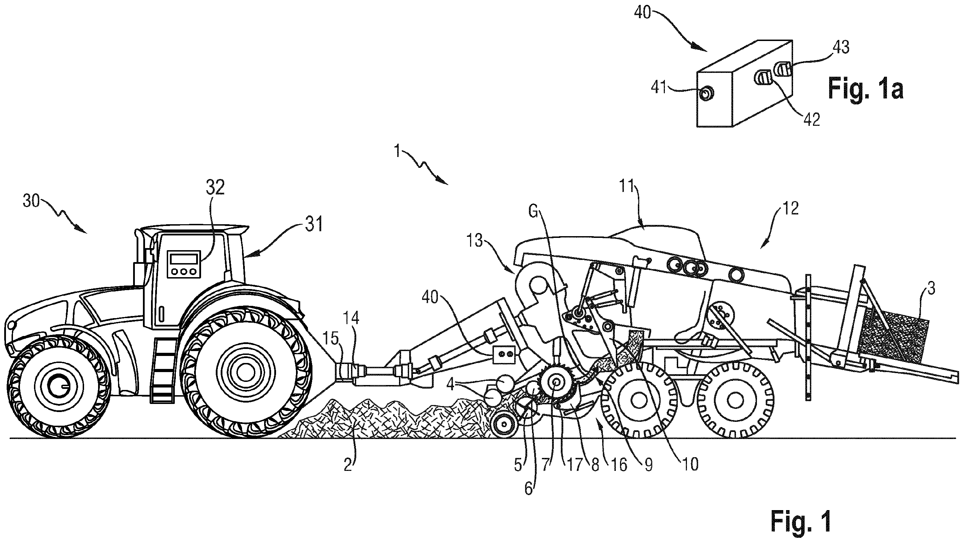

Fig. 1 zeigt eine Ballenpresse 1 in Form einer Quaderballenpresse bei der Erntefahrt in schematischer Seitenansicht. Im Erntebetrieb nimmt die Ballenpresse 1 auf dem Feldboden liegendes Erntegut 2, beispielsweise zum Schwad gelegtes Stroh auf und verarbeitet dieses zu quaderförmig gepressten und mit Bindegarn verschnürten Ballen 3, die nach Fertigstellung heckseitig aus der Ballenpresse 1 ausgeworfen werden.

Dazu nimmt die Ballenpresse 1 das Erntegut 2 mittels einer mit Zinken besetzten rotierenden Aufsammeltrommel 5 vom Boden auf, um es in Zusammenwirkung mit zwei darüberliegenden Niederhalterollen 4 den weiteren Förder- und Verarbeitungseinrichtungen der Ballenpresse 1 zuzuführen. Als nächstes wird das Erntegut 2 von einem Förderorgan 6, beispielsweise einer Querförderschnecke, von einer ursprünglichen Aufnahmebreite der Aufsammeltrommel 5 auf eine geringere Breite des Zuführkanals 9 zusammengeführt und mittels auf dem Förderorgan 6 mittig angeordneter Förderpaddel (nicht dargestellt) zu einem nachgelagerten (Schneid-) Rotor 7 gefördert. Der Rotor 7 weist über dessen Breite eine Vielzahl von zueinander beabstandeten Rotorsternen auf. Die Rotorsterne sind beispielsweise wendelförmig auf dem Rotor 7 angeordnet, um eine gleichmäßige Förderwirkung sowie eine gleichmäßige Belastung des zugehörigen Antriebsstrangs zu erzielen.

Unterhalb des Rotors 7 ist eine schematisch dargestellte Schneideinrichtung 16 angeordnet. Die Schneideinrichtung 16 weist im Wesentlichen eine Vielzahl von Messern 8 auf, die in Bezug auf den Zuführkanal 9 quer zur Förderrichtung des Ernteguts 2 nebeneinander angeordnet sind. Demzufolge ist nur ein in der Zeichnungsansicht vorderes (in Fahrtrichtung der Presse 1 gesehen linkes) Messer 8 der Schneideinrichtung 16 zu sehen, das - wie auch die übrigen Messer 8 - um eine quer zur Gutförderrichtung verlaufende Messerachse 17 verschwenkbar ist. Jedes Messer 8 ist so zwischen einer passiven Stellung, in der es nicht in den Erntegutkanal 9 hineinragt, und einer aktiven Stellung verschwenkbar, in der es in den Erntegutkanal 9 hineinragt.

Befindet sich ein Messer 8 (bzw. eine Vielzahl oder sämtliche der Messer 8) in der aktiven Stellung, so wird das den Zuführkanal 9 durchströmende Erntegut 2 durch kämmende Zusammenwirkung von Rotor 7 (dessen Rotorsternen) und dem jeweiligen Messer 8 geschnitten.

Nach Passieren der Schneideinrichtung 16 wird das Erntegut 2 von einem Sammelhübe durchführenden Raffer 10 gesammelt, der dann portionsweise eine darüberliegende Presskammer 11 befüllt. Nach dem dort stattfindenden Pressvorgang dient eine Knoteinrichtung 12 dazu, den gepressten Ballen 3 mit Bindegarn zu verschnüren, um diesen fertigzustellen. Heckseitig der Ballenpresse 1 erfolgt anschließend der Ballenabwurf.

Frontseitig der Ballenpresse 1 befindet sich eine Zugdeichsel 15, mit der die Ballenpresse 1 von einem Zugfahrzeug, hier einem Traktor 30 gezogen und von diesem angetrieben wird. Zum Antrieb der Förder- und Verarbeitungseinrichtungen der Ballenpresse 1 dient eine mit einem Zapfwellenabtrieb des Traktor 30 gekoppelte Hauptantriebswelle 14, die in das Hauptgetriebe 13 der Presse 1 mündet.

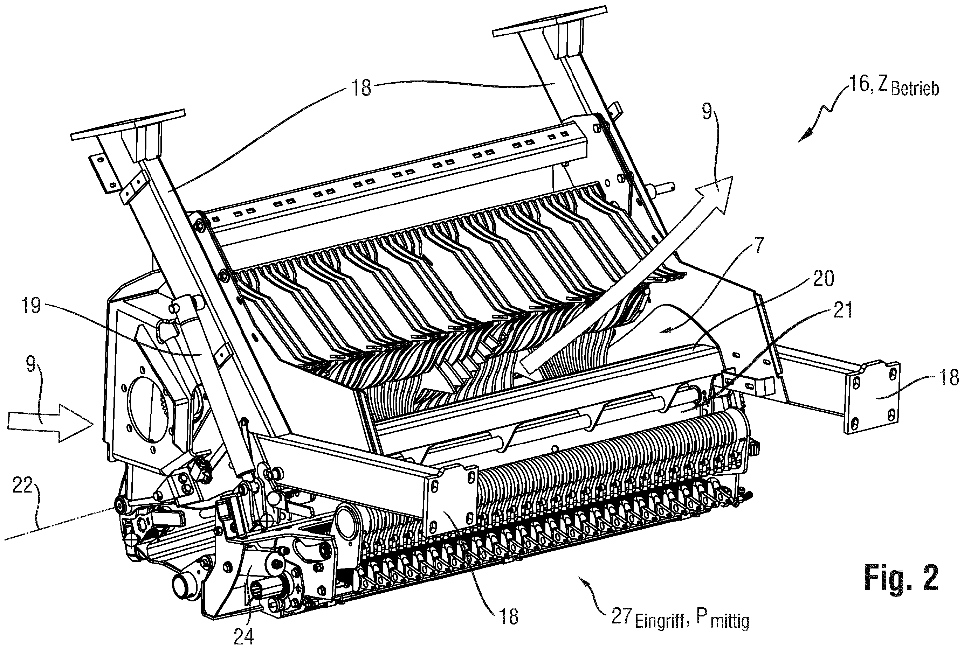

Die Fig. 2 bis 4 zeigen nun im Detail eine Schneideinrichtung 16, die in eine Ballenpresse 1 gemäß Fig. 1 eingebaut sein kann, in verschiedenen Zuständen in perspektivischer Ansicht. Dabei zeigt zunächst Fig. 2 eine Schneideinrichtung 16 mit geschlossenem Tragrahmen 21, d.h. im Betriebszustand (Z_{Betrieb}). Die Schneideinrichtung 16 wird von einem Maschinenrahmen 18 getragen, der im gezeigten Ausführungsbeispiel beidseitig des Rotors 7 angeordnete, in einem stumpfen Winkel miteinander verschweißte Trägerelemente mit Rechteckprofil umfasst. Ein Rotor 7 mit einer Vielzahl daran befestigter Rotorsterne (nicht einzeln bezeichnet) ist drehbar gegenüber dem Maschinenrahmen 18 gelagert.

Unmittelbar unterhalb des Rotors 7 erstreckt sich ein gebogenes Bodenblech 20, das den Erntegutkanal 9 (angedeutet durch die ein- und austretenden Pfeile 9) über dessen gesamte Breite nach unten begrenzt. Das Bodenblech 20 ist um eine quer zum Erntegutkanal 9 verlaufende Schwenkachse 22 schwenkbar gegenüber dem Maschinenrahmen 18 gelagert. In dem Bodenblech 20 sind über dessen Breite eine Vielzahl schlitzartiger Ausnehmungen ausgebildet (in Fig. 2 aufgrund des Betriebszustands Z_{Betrieb} verdeckt), durch welche eine Anzahl von Messern 8 (in Fig. 2 ebenfalls verdeckt) in den Erntegutkanal 9 hineinragen kann.

Zusätzlich zum Bodenblech 20 ist ein Tragrahmen 21 um die quer zum Erntegutkanal 9 verlaufende Schwenkachse 22 schwenkbar gegenüber dem Maschinenrahmen 18 gelagert. Der Tragrahmen 21 hält einen sich darunter befindlichen Messerträger 27, an dem eine Vielzahl von Messern 8 (in Fig. 2 verdeckt) in Bezug auf den Erntegutkanal 9 in Reihe nebeneinander angeordnet sind. Aufgrund der Verschwenkbarkeit des Tragrahmens 21 um die Schwenkachse 22 ist auch der davon getragene Messerträger 27 um die Schwenkachse 22 verschwenkbar.

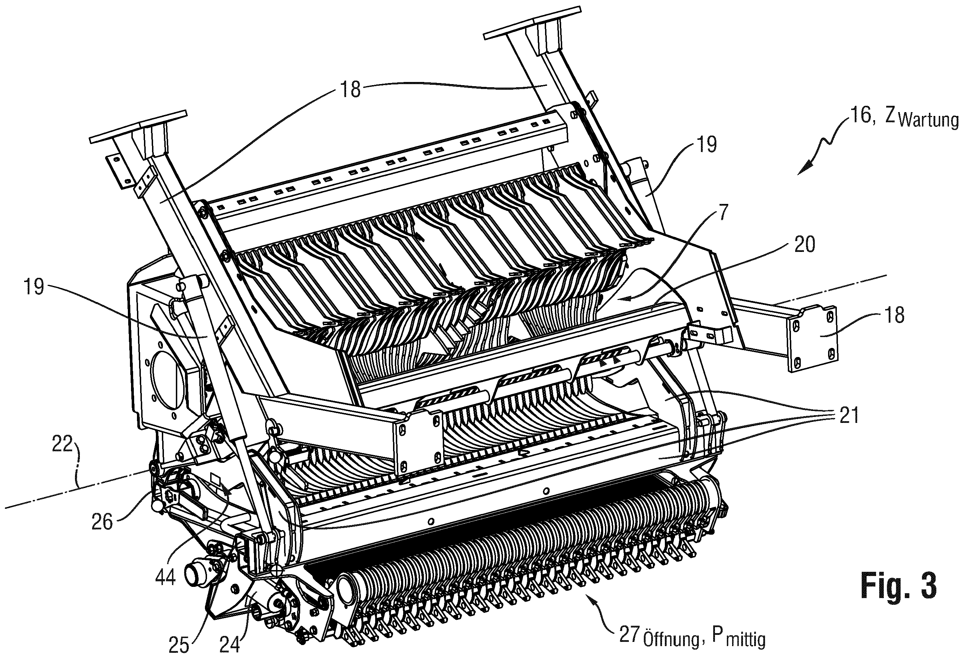

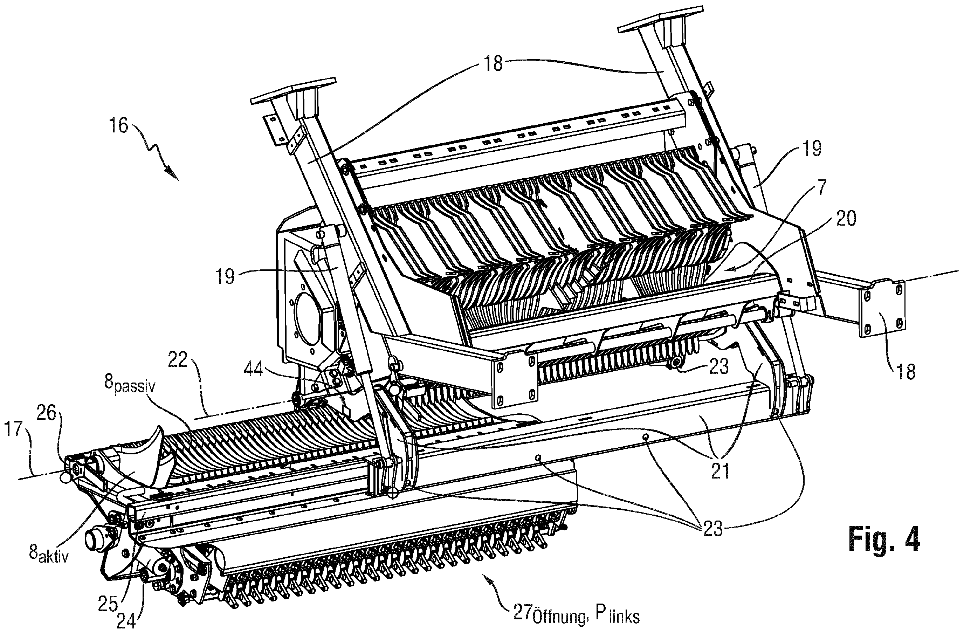

Zur Betätigung des Tragrahmens 21 dienen zwei beidseitig des Erntegutkanals 9 angeordnete hydraulische Stellzylinder 19 (in der perspektivischen Ansicht der Fig. 2 ist nur der linke Stellzylinder 19 sichtbar). Das Paar von Stellzylindern 19 wirkt zwischen dem Maschinenrahmen 18 und dem Tragrahmen 21 wie ein Stellglied, um den Tragrahmen 21 mit dem Messerträger 27 aus einem in Fig. 2 dargestellten Zustand, in dem der Messerträger 27 seitlich von Seitenwänden des Erntegutkanals 9 eingeschlossen ist, in einen in Fig. 3 dargestellten geöffneten Zustand verschwenken zu können, in dem der Messerträger 27 in seitliche Positionen bewegbar ist. Die sich daraus ergebenden unterschiedlichen Zustände des Messerträgers 27 sind mit 27_{Eingriff} (Fig. 2) und 27_{Öffnung} (Fig. 3, 4) bezeichnet.

Dementsprechend zeigt Fig. 3 die Schneideinrichtung 16 bei geöffnetem Tragrahmen 21 (Wartungszustand Z_{Wartung} der Schneideinrichtung 16) in perspektivischer Ansicht. Die Stellzylinder 19 sind im Unterschied zu Fig. 2 ausgefahren, so dass der Tragrahmen 21 mitsamt daran befestigtem Messerträger 27 gegenüber dem Erntegutkanal 9 (im Vergleich zu Fig. 2) abgesenkt ist. Das Bodenblech 20 befindet sich jedoch in der gleichen Position wie in Fig. 2, ist nämlich mittels eines Feststellhebels (nicht näher bezeichnet) gegenüber dem Maschinenrahmen 18 arretiert. In dem in Fig. 3 gezeigten geöffneten Wartungszustand Z_{Wartung} ist demnach ein zwischen dem abgesenkten Messerträger 27_{Öffnung} und dem Bodenblech 20 befindlicher Bereich freigegeben. In dem Bereich angesammelte Verschmutzungen lassen sich in diesem Zustand leicht entfernen.

In den Fig. 2 und 3 befindet sich der Messerträger 27 jeweils in einer mittigen Position P_{mittig} bezogen auf den Erntegutkanal 9, d.h. der Messerträger 27 ist zentral zwischen den Stellzylindern 19 angeordnet. Im beschriebenen Ausführungsbeispiel ist jedoch der Messerträger 27 weiterhin in einer sich quer zum Erntegutkanal 9 erstreckenden Richtung linear beweglich gelagert, so dass sich dieser aus der in den Fig. 2 und 3 gezeigten mittigen Position P_{mittig} beidseitig in jeweils davon seitliche Positionen bewegen kann, in denen der Messerträger 27 jeweils zumindest zur Hälfte aus dem Erntegutkanal 9 hinausragt.

Dementsprechend zeigt Fig. 4 die Schneideinrichtung 16, wobei der Messerträger 27_{Öffnung} aus dem geöffneten Zustand gemäß Fig. 3 beispielhaft in eine linke (bezogen auf die Vorwärtsrichtung der Erntemaschine) Position Pₗᵢₙₖₛ bewegt wurde. Eine Verschiebung nach rechts in eine rechte Position (nicht gezeigt) ist entsprechend auch möglich.

Wie Fig. 4 zeigt, ist dazu der Messerträger 27 im Sinne einer Schublade ausgebildet, die gegenüber dem haltenden Tragrahmen 21 seitlich verschiebbar gelagert ist. Am Tragrahmen 21, der im Wesentlichen zwei seitliche Arme und zumindest eine diese verbindende Querstrebe umfasst, sind dazu mehrere über die Breite des Erntegutkanals 9 angeordnete Tragrollen 23 angeordnet. Wie in Fig. 4 angedeutet, sind an einer hinteren Querstrebe des Tragrahmens 21 in gleichmäßigen Abständen vier Tragrollen 23 angeordnet. Der Messerträger 27, an dem eine Vielzahl von um eine Messerachse 17 schwenkbaren Messern 8 nebeneinander angeordnet ist, weist jeweils eine quer zum Erntegutkanal 9 verlaufende vordere Schiene 26 und eine quer zum Erntegutkanal 9 verlaufende hintere Schiene 25 auf. Die hintere Schiene 25 und die vordere Schiene 26 werden von den Tragrollen 23 des Tragrahmens 21 derart auf einer quer zum Erntegutkanal 9 verlaufenden Führungsbahn gehalten, dass sich der gesamte Messerträger 27 - bei geöffnetem Zustand des Tragrahmens 21 - aus der mittigen Position P_{mittig} gemäß Fig. 3 in die linke Position Pₗᵢₙₖₛ gemäß Fig. 4 (oder in die nicht gezeigte rechte Position) bewegen lässt. In beiden Seitenpositionen ragt der Messerträger 27 jeweils zu etwa 60% seiner Breite aus dem Erntegutkanal 9 seitlich hinaus.

Durch Einnahme der beiden Positionen Pₗᵢₙₖₛ bzw. P_{rechts} lassen sich demnach sämtliche Messer 8 bequem erreichen, um diese beispielsweise auszutauschen, zu reinigen oder um sich aus sonstigen Gründen Zugang zum Messerträger 27 zu verschaffen. Aufgrund der gleichmäßigen Anordnung der vier Tragrollen 23 wird die hintere Schiene 25 auch in den seitlichen Positionen Pₗᵢₙₖₛ bzw. P_{rechts} des Messerträgers 27 von jeweils zumindest zwei der Tragrollen 23 kontaktiert. So ist auch in den voll ausgefahrenen Positionen Pₗᵢₙₖₛ bzw. P_{rechts} ein sicherer Halt des Messerträgers 27 im Tragrahmen 21 gewährleistet. Da sich die Tragrollen 23 jeweils unterhalb der vorderen bzw. hinteren Schiene 26 bzw. 25 befinden, ist zudem gewährleistet, dass durch den Schneidvorgang anfallende Partikel, die beispielsweise durch die im Bodenblech 20 ausgebildeten schlitzartigen Ausnehmungen fallen, nicht mit den linearen Führungsmitteln, insbesondere den Tragrollen 23 sowie den damit zusammenwirkenden Schienen 25, 26 in Kontakt geraten und diese verunreinigen.

Zur Verstellung der Messer 8 von einem aktiven in einen passiven Zustand (bzw. umgekehrt) dienen zwei beidseitig des Messerträgers 27 angeordnete Aktoren 24, die hier als hydraulische Stellzylinder ausgeführt sind und welche die Messer 8 über eine gemeinsame Stellmechanik bewegen können. Die Stellmechanik kann vorsehen, dass die Messer 8 gruppenweise aktivierbar sind. Beispielhaft ist ein aktives Messer mit 8ₐₖₜᵢᵥ bezeichnet und ist ein passives Messer mit 8ₚₐₛₛᵢᵥ bezeichnet.

Zur Erläuterung der Erfindung sei nun wieder auf die Fig. 1 verwiesen. Die dort gezeigte Ballenpresse 1 ist bevorzugt mit einer Schneideinrichtung 16 wie in den Fig. 2 bis 4 gezeigt ausgestattet.

Die gezeigte Ballenpresse 1 der Fig. 1 ist mit einer Steuereinrichtung ausgestattet, die (im gezeigten Ausführungsbeispiel) integral mit einer Bedieneinrichtung als eine Steuer- und Bedieneinrichtung 40 ausgebildet ist. Die Steuer- und Bedieneinrichtung 40 ist an einer Seitenwand der Ballenpresse 1 angebracht und somit für einen neben der Ballenpresse 1 stehenden Bediener leicht zugänglich. Erfindungsgemäß lässt sich die Steuereinrichtung in einem automatischen Betriebsmodus betreiben, um den zumindest einen Aktor 24, mit dem sich die Messer 8 aktivieren bzw. passivieren lassen, und das zumindest eine Stellglied 19, mit dem sich der Tragrahmen 21 - und damit der Messerträger 27 - verschwenken lässt, so anzusteuern, dass die Schneideinrichtung 16 selbsttätig aus einem Betriebszustand Z_{Betrieb} (vgl. Fig. 2) in einen Wartungszustand Z_{Wartung} (vgl. Fig. 3) oder umgekehrt gebracht werden kann.

Um die Schneideinrichtung 16 vom Betriebszustand Z_{Betrieb} in den Wartungszustand Z_{Wartung} zu bringen, ist demnach vorgesehen, dass zunächst sämtliche Messer 8 aktiviert werden. Es erfolgt eine entsprechende Ansteuerung der Aktoren 24. Durch die Aktivierung der Messer 8 findet bereits eine erste Reinigung der Messerschlitze im Bodenblech 20 statt. Anschließend wird dann der Messerträger 27 bei aktiven Messern 8 mittels der Stellglieder 19 in einen Öffnungszustand 27_{Öffnung} bewegt, wobei aufgrund der aktiven Messer 8 nochmals eine vorteilhafte Reinigung der Messerschlitze erfolgt, indem Verschmutzungen aus diesen herausgezogen werden. Zu diesem Zweck kann vorgesehen sein, dass der Messerträger 27 zunächst um einen maximal möglichen Winkel nach unten geschwenkt wird, um mit den aktiven Messern 8 möglichst viele Erntegutreste aus den Messerschlitzen zu ziehen.

Dann werden die Messer 8 deaktiviert, damit der Messerträger 27 aus seiner zunächst mittigen Position P_{mittig} bedarfsweise seitlich verschiebbar - z.B. in die linke Position Pₗᵢₙₖₛ - ist. Ein Zugriff auf die Messer 8 ist dann einfach möglich, um diese beispielsweise auszutauschen, zu schärfen, zu reinigen etc.. Falls sich der Messerträger 27 noch immer in einem maximal nach unten geschwenkten Zustand befindet, kann es erforderlich sein, dass die Steuerungseinrichtung den Messerträger 27 mittels der Stellglieder 19 zuvor wieder leicht anhebt, um ein seitliches Verschieben der Messerträgers 27 zu ermöglichen.

Um die Schneideinrichtung 16 vom Wartungszustand Z_{Wartung} in den Betriebszustand Z_{Betrieb} zu bringen, ist ein einfacherer Ablauf vorgesehen, wonach zunächst die Messer 8 aktiviert werden und dann der Messerträger 27 in den Eingriffszustand bewegt wird. Durch die aktive Stellung der Messer 8 beim Einfahren des Messerträgers 27 erfolgt hier ebenfalls vorteilhaft wieder eine Reinigung der Messerschlitze im Bodenblech 20.

Im beiden Fällen, d.h. beim Bringen in den Wartungszustand und beim Bringen in den Betriebszustand koordiniert die Steuereinrichtung durch Ansteuerung der Aktoren 24 und der Stellglieder 19 die Abfolge der Stellvorgänge. Die Steuer- und Bedieneinrichtung 40 verfügt dabei über verschiedene Sicherheitsvorkehrungen. Zum Schutz eines Maschinenbedieners ist beispielsweise eine Betätigung nur bei stehender Antriebswelle 14 der Ballenpresse 1 möglich. Weiterhin ist - wie in den Fig. 3 und 4 angedeutet - dem Messerträger 27 ein Positionssensor 44 zugeordnet, der mit der Steuer- und Bedieneinrichtung 40 signalverbunden ist, so dass eine Ansteuerung der Aktoren 24 und Stellglieder 19 nur dann möglich ist, wenn der Messerträger 27 seine mittige Position P_{mittig} einnimmt. Hierdurch werden Beschädigungen an der Erntemaschine sowie Verletzungen wirksam vermieden.

Die Steuer- und Bedieneinrichtung 40 ist in der Detaildarstellung gemäß Fig. 1a näher gezeigt. Diese weist demnach drei Tastschalter, nämlich eine Automatiktaste 41, einen Auf-Ab-Schalter 42 und einen Auswahlschalter 43 auf. Um im automatischen Betriebsmodus die Schneideinrichtung 16 in den Wartungszustand Z_{Wartung} zu bringen, muss die Automatiktaste 41 und gleichzeitig der Auf-Ab-Schalter 42 in "aufwärts-Stellung" gehalten werden. Durch die erzwungene beidhändige Bedienung wird sichergestellt, dass der Maschinenbediener seine Hände nicht in den Bereich bewegter Bauteile hält. Zum automatischen Verbringen in dem Betriebszustand Z_{Betrieb} sind entsprechend Automatiktaste 41 und gleichzeitig der Auf-Ab-Schalter 42 in "abwärts-Stellung" zu halten.

Alternativ lässt die Steuer- und Bedieneinrichtung 40 einen manuellen Betriebsmodus zu, in welchem die Aktoren 24 und/oder die Stellglieder 19 einzeln betätigbar sind. Dazu wird der Auswahlschalter 43 aus einer Neutralstellung in eine der beiden Positionen "Messeraktivierung" oder "Schneidbodenverstellung" gebracht und wird gleichzeitig der Auf-Ab-Schalter 42 entweder in "aufwärts-" oder "abwärts-Stellung" gedrückt. Ist die Messeraktivierung ausgewählt, werden so die Aktoren 24 der Messer 8 betätigt. Ist die Schneidbodenverstellung ausgewählt, werden so die Stellglieder 19 des Tragrahmens 21 bzw. des daran gelagerten Messerträgers 27 betätigt.

Wie Fig. 1 zeigt, ist die Erfindung in besonderer Weise auch auf eine Kombination aus einer Erntemaschine wie einer Ballenpresse 1 und einem Zugfahrzeug, hier einem Traktor 30 anwendbar. Demnach ist der erfindungsgemäß vorgesehenen Steuerungseinrichtung 40 zusätzlich eine im Traktor 30, insbesondere in dessen Fahrerkabine 31 angeordnete Bedieneinrichtung 32 zugeordnet. Mit anderen Worten lässt sich die Steuerungseinrichtung 40 somit von zwei Orten bedienen: einmal von der Bedien- und (damit integral ausgebildeten) Steuereinrichtung 40 an der Erntemaschine 1, und daneben von der Bedieneinrichtung 32 in der Fahrerkabine 31 des Traktors 30. Zur Kommunikation mit der Bedieneinrichtung 32 kann vorteilhaft eine Bus-Technologie (Isobus) genutzt werden.

Um Konflikte zwischen den beiden Bedieneinrichtungen zu vermeiden, ist die Vergabe von Zugriffsrechten der Bedieneinrichtungen auf die Steuereinrichtung vom Antriebszustand der Ballenpresse 1, insbesondere vom Zustand der Antriebswelle 14 abhängig. Bei abgeschaltetem Antrieb 14 der Ballenpresse 1 hat die an der Ballenpresse 1 angeordnete Bedieneinrichtung 40 Vorrang gegenüber der am Traktor 30 angeordneten Bedieneinrichtung 32, während bei angeschaltetem Antrieb 14 die am Traktor 30 angeordnete Bedieneinrichtung 32 Vorrang hat.

### Bezugszeichenliste

- 1: Ballenpresse
- 2: Erntegut
- 3: Ballen
- 4: Niederhalterollen
- 5: Aufsammeltrommel
- 6: Förderorgan
- 7: Rotor
- 8: Messer
- 9: Zuführkanal
- 10: Raffer
- 11: Presskammer
- 12: Knoteinrichtung
- 13: Hauptgetriebe
- 14: Hauptantriebswelle
- 15: Zugdeichsel
- 16: Schneideinrichtung
- 17: Messerachse
- 18: Maschinenrahmen
- 19: Stellglied
- 20: Bodenblech
- 21: Tragrahmen
- 22: Schwenkachse
- 23: Tragrolle
- 24: Aktor
- 25: hintere Schiene
- 26: vordere Schiene
- 27: Messerträger
- 27_{Eingriff}: Messerträger im Eingriffszustand
- 27_{Öffnung}: Messerträger im Öffnungszustand
- 30: Traktor
- 31: Fahrerkabine
- 32: Bedieneinrichtung
- 40: Steuer- und Bedieneinrichtung
- 41: Automatiktaste
- 42: Auf-Ab-Schalter
- 43: Auswahlschalter
- 44: Positionssensor

- G: Gutstromrichtung
- *P_{mittig}*: mittige Position
- *Pₗᵢₙₖₛ*: linke Position
- Z_{Betrieb}: Betriebsszustand
- Z_{Wartung}: Wartungszustand

## Patentansprüche

1. Landwirtschaftliche Erntemaschine, insbesondere Ballenpresse (1) oder Ladewagen, mit einer Schneideinrichtung (16) für landwirtschaftliches Erntegut (2), wobei die Schneideinrichtung (16) einen Messerträger (27) und eine Vielzahl diesem gegenüber beweglich gelagerter Messer (8) umfasst, die mittels zumindest eines Aktors (24) zwischen einer aktiven Stellung, in der diese in einen von Erntegut (2) durchströmten Erntegutkanal (9) hineinragen, und einer passiven Stellung, in der diese aus dem Erntegutkanal (9) zurückgezogen sind, bewegbar sind, wobei der Messerträger (27) mittels zumindest eines Stellglieds (19) aus einer Eingriffsposition (27_{Eingriff}), in welcher aktivierte Messer (8) in den Erntegutkanal (9) hineinragen, in eine Öffnungssposition (27öffnung) bewegbar ist, welche einen Zugriff auf die Messer (8) zu Wartungszwecken ermöglicht,
**gekennzeichnet durch** eine Steuereinrichtung (40), die betreibbar ist, den zumindest einen Aktor (24) und das zumindest eine Stellglied (19) im Rahmen eines automatischen Betriebsmodus so anzusteuern, dass die Schneideinrichtung (16) selbsttätig aus einem Betriebszustand (Z_{Betrieb}) in einen Wartungszustand (Z_{Wartung}) oder umgekehrt bringbar ist, wobei bei der Überführung des Betriebszustands in den Wartungszustand zunächst sämtliche Messer (8) durch eine entsprechende Ansteuerung der Aktoren (24) aktiviert werden, wodurch bereits eine erste Reinigung der Messerschlitze im Bodenblech (20) stattfindet, anschließend der Messerträger (27) bei aktiven Messern (8) mittels der Stellglieder (19) in einen Öffnungszustand (27_{Öffnung}) bewegt wird, wobei sich das Bodenblech (20) in unveränderter Position befindet, wodurch in dem geöffneten Wartungszustand (Z_{Wartung}) ein zwischen dem abgesenkten Messerträger (27_{Öffnung}) und dem Bodenblech (20) befindlicher Bereich freigegeben wird, und dann die Messer (8) durch Ansteuern der Aktoren (24) deaktiviert werden.

2. Erntemaschine nach Anspruch 1, **dadurch gekennzeichnet, dass** der Steuereinrichtung (40) eine an der Erntemaschine (1) angeordnete, für einen neben der Erntemaschine (1) stehenden Maschinenbediener zugängliche Bedieneinrichtung (40) zugeordnet ist.

3. Erntemaschine nach Anspruch 1 oder 2, **dadurch gekennzeichnet, dass** die Steuereinrichtung (40) über eine Sicherheitsschaltung zum Schutz des Maschinenbedieners verfügt, derart, dass eine Betätigung eines Aktors (24) oder des Stellglieds (19) nur bei ausgeschaltetem Antrieb, insbesondere bei stehender Antriebswelle (14) der Erntemaschine (1) möglich ist.

4. Erntemaschine nach Anspruch 2 oder 3, **dadurch gekennzeichnet, dass** die Bedieneinrichtung (40) über eine Sicherheitsschaltung zum Schutz des Maschinenbedieners verfügt, derart, dass eine Betätigung eines Aktors (24) oder Stellglieds (19) nur bei beidhändiger Berührung der Bedieneinrichtung (40) durch den Maschinenbediener möglich ist.

5. Erntemaschine nach einem der vorigen Ansprüche, **dadurch gekennzeichnet, dass** der Messerträger (27) von einem Tragrahmen (21) gehalten wird, der um eine quer zum Erntegutkanal (9) verlaufende Achse (22) schwenkbar gegenüber einem Maschinenrahmen (18) der Erntemaschine (1) gelagert ist, um zwischen der Eingriffsposition (27_{Eingriff}) und der Öffnungsposition (27_{Öffnung}) beweglich zu sein.

6. Erntemaschine nach Anspruch 5, **dadurch gekennzeichnet, dass** der Messerträger (27) in einer sich quer zum Erntegutkanal (9) erstreckenden Richtung linear beweglich gegenüber dem Tragrahmen (21) gelagert ist, so dass der Messerträger (27) im Sinne einer Schublade aus einer bezogen auf den Erntegutkanal (9) mittigen Position (P_{mittig}) in zumindest eine seitliche Position (Pₗᵢₙₖₛ) bewegbar ist, in welcher der Messerträger (27) zumindest zur Hälfte aus dem Erntegutkanal (9) hinausragt.

7. Erntemaschine nach einem der vorigen Ansprüche, **dadurch gekennzeichnet, dass** dem Messerträger (27) ein Positionssensor (44) zugeordnet ist, der mit der Steuereinrichtung (40) signalverbunden ist, damit die Steuereinrichtung (40) eine Betätigung eines Aktors (24) oder Stellglieds (19) nur ermöglicht, wenn der Messerträger (27) die mittige Position (P_{mittig}) einnimmt.

8. Erntemaschine nach einem der vorigen Ansprüche, **dadurch gekennzeichnet, dass** der Schneideinrichtung (16) ein den Erntegutkanal (9) nach unten gegenüber dem Messerträger (27) abdeckendes Gutleitelement, insbesondere ein Bodenblech (20) zugeordnet ist, in dem eine Vielzahl schlitzartiger Ausnehmungen für die am Messerträger (27) angeordneten Messer ausgebildet ist.

9. Erntemaschine nach Anspruch 8, **dadurch gekennzeichnet, dass** das Bodenblech (20) und der Tragrahmen (21) um die gleiche Achse (22) schwenkbar gegenüber dem Maschinenrahmen (18) der Erntemaschine (1) gelagert sind.

10. Erntemaschine nach einem der vorigen Ansprüche, **dadurch gekennzeichnet, dass** die Steuereinrichtung (40) in einem manuellen Betriebsmodus betreibbar ist, in welchem der zumindest eine Aktor (24) und/oder das Stellglied (19) über eine Bedieneinrichtung (40) einzeln betätigbar sind.

11. Kombination aus einem Zugfahrzeug, insbesondere einem Traktor (30), und einer von diesem gezogenen Erntemaschine (1) nach einem der vorigen Ansprüche, wobei der Steuerungseinrichtung (40) zusätzlich eine im Zugfahrzeug (30) angeordnete, für einen das Zugfahrzeug (30) bedienenden Maschinenbediener zugängliche Bedieneinrichtung (32) zugeordnet ist.

12. Kombination nach Anspruch 11, **dadurch gekennzeichnet, dass** die Vergabe von Zugriffsrechten der an der Erntemaschine (1) angeordneten Bedieneinrichtung (40) auf die Steuereinrichtung (40) und der am Zugfahrzeug (30) angeordneten Bedieneinrichtung (32) auf die Steuereinrichtung (40) vom Antriebszustand der Erntemaschine (1), insbesondere deren Antriebswelle (14), abhängig ist.

13. Kombination nach Anspruch 12 oder 13, **dadurch gekennzeichnet, dass** bei abgeschaltetem Antrieb (14) der Erntemaschine (1) die an der Erntemaschine (1) angeordnete Bedieneinrichtung (40) Vorrang gegenüber der am Zugfahrzeug (30) angeordneten Bedieneinrichtung (32) hat, während bei angeschaltetem Antrieb (14) der Erntemaschine (1) die am Zugfahrzeug (30) angeordnete Bedieneinrichtung (32) Vorrang gegenüber der an der Erntemaschine (1) angeordneten Bedieneinrichtung (40) hat.

14. Verfahren zum Warten einer landwirtschaftlichen Erntemaschine (1) nach einem der vorigen Ansprüche, wobei deren Schneideinrichtung (16) aus einem Betriebszustand (Z_{Betrieb}) in einen Wartungszustand (Z_{Wartung}) gebracht wird, indem zunächst sämtliche Messer (8) durch eine entsprechende Ansteuerung der Aktoren (24) aktiviert werden, wobei sich in einem aktiven Zustand ein Messer (8) in einer Stellung befindet, in der es so in den Erntegutkanal hineinragt, dass vorbeiströmendes Erntegut in Zusammenwirkung mit dessen Schneidkante zerkleinert wird, dann der Messerträger (27) bei aktivierten Messern (8) mittels der Stellglieder (19)_in einen Öffnungszustand (27_{Öffnung}) bewegt wird, und dann die Messer (8) durch Ansteuern der Aktoren (24) deaktiviert werden, wobei sich in einem deaktivierten Zustand ein Messer in einer Stellung befindet, in der es aus dem Erntegutkanal zurückgezogen ist, das Erntegut also nicht schneidet.

15. Verfahren nach Anspruch 14, **dadurch gekennzeichnet, dass** zum Verbringen der Schneideinrichtung (16) aus dem Wartungszustand (Z_{Wartung}) in den Betriebszustand (Z_{Betrieb}) die Messer (8) aktiviert werden und dann der Messerträger (27) in den Eingriffszustand (27_{Eingriff}) bewegt wird.

## Claims

1. An agricultural harvester, in particular a bale press (1) or a loading wagon, comprising a cutting device (16) for agricultural crop material (2), wherein the cutting device (16) includes a blade carrier (27) and a plurality of blades (8) which are mounted moveably with respect thereto and which are moveable by means of at least one actuator (24) between an active position in which they project into a crop material passage (9) through which crop material (2) flows and a passive position in which they are retracted from the crop material passage (9), wherein the blade carrier (27) is moveable by means of at least one setting member (19) from an engagement position (27_{Eingriff}) in which activated blades (8) project into the crop material passage (9) into an open position (27_{Öffnung}) which permits access to the blades (8) for maintenance purposes,
**characterised by** a control device (40) operable to actuate the at least one actuator (24) and the at least one setting member (19) in an automatic operating mode in such a way that the cutting device (16) can be automatically moved from an operating state (Z_{Betrieb}) into a maintenance state (Z_{Wartung}) or vice-versa, wherein upon transfer from the operating state into the maintenance state firstly all blades (8) are activated by corresponding actuation of the actuators (24) whereby a first cleaning operation for the blade slots in the bottom plate (20) already takes place, then the blade carrier (27) with the blades (8) active is moved by means of the setting members (19) into an open position (27_{Öffnung}), wherein the bottom plate (20) is in an unchanged position whereby in the opened maintenance state (Z_{Wartung}) a region between the lowered blade carrier (27_{Öffnung}) and the bottom plate (20) is freed and then the blades (8) are deactivated by actuation of the actuators (24).

2. A harvester according to claim 1 **characterised in that** associated with the control device (40) is an operating device (40) which is arranged on the harvester (1) and which is accessible for a machine operator standing beside the harvester (1).

3. A harvester according to claim 1 or claim 2 **characterised in that** the control device (40) has a safety circuit for protecting the machine operator in such a way that actuation of an actuator (24) or the setting member (19) is possible only when the drive is switched off, in particular when the drive shaft (14) of the harvester (1) is stationary.

4. A harvester according to claim 2 or claim 3 **characterised in that** the control device (40) has a safety circuit for protecting the machine operator in such a way that actuation of an actuator (24) or the setting member (19) is possible only when the machine operator is touching the operating device (40) with both hands.

5. A harvester according to one of the preceding claims **characterised in that** the blade carrier (27) is held by a support frame (21) which is mounted pivotably about an axis (22) extending transversely relative to the crop material passage (9) with respect to a machine frame (18) of the harvester (1) to be moveable between the engagement position (27_{Eingriff}) and the open position (27_{Öffnung}).

6. A harvester according to claim 5 **characterised in that** the blade carrier (27) is mounted linearly moveably relative to the support frame (21) in a direction extending transversely relative to the crop material passage (9) so that the blade carrier (27) is moveable in the manner of a drawer from a central position (P_{mittig}) with respect to the crop material passage (9) into at least one lateral position (Pₗᵢₙₖₛ) in which the blade carrier (27) at least half projects out of the crop material passage (9).

7. A harvester according to one of the preceding claims **characterised in that** associated with the blade carrier (27) is a position sensor (44) connected in signal-conducting relationship to the control device (40) so that the control device (40) permits actuation of an actuator (24) or a setting member (19) only when the blade carrier (27) assumes the central position (P_{mittig}).

8. A harvester according to one of the preceding claims **characterised in that** associated with the cutting device (16) is a material guide element, in particular a bottom plate (20), which covers the crop material passage (9) downwardly with respect to the blade carrier (27) and in which there is a plurality of slot-like openings for the blades arranged on the blade carrier (27).

9. A harvester according to claim 8 **characterised in that** the bottom plate (20) and the support frame (21) are mounted pivotably about the same axis (22) with respect to the machine frame (18) of the harvester (1).

10. A harvester according to one of the preceding claims **characterised in that** the control device (40) is operable in a manual mode of operation, in which the at least one actuator (24) and/or the setting member (19) are actuable individually by way of an operating device (40).

11. A combination comprising a towing vehicle, in particular a tractor (30), and a harvester (1) according to one of the preceding claims, which is towed thereby, wherein associated with the control device (40) there is additionally an operating device (32) which is arranged in the towing vehicle (30) and which is accessible to a machine operator operating the towing vehicle (30).

12. A combination according to claim 11 **characterised in that** the allocation of access rights of the operating device (40) arranged on the harvester (1) to the control device (40) and the operating device (32) arranged on the towing vehicle (30) to the control device (40) is dependent on the drive state of the harvester (1), in particular its drive shaft (14).

13. A combination according to claim 11 or claim 12 **characterised in that** when the drive (14) of the harvester (1) is switched off the operating device (40) arranged on the harvester (1) has priority over the operating device (32) arranged on the towing vehicle (30) while when the drive (14) of the harvester (1) is switched on the operating device (32) arranged on the towing vehicle (30) has priority over the operating device (40) arranged on the harvester (1).

14. A method of maintaining an agricultural harvester (1) according to one of the preceding claims wherein its cutting device (16) is moved from an operating state (Z_{Betrieb}) into a maintenance state (Z_{Wartung}) by firstly all blades (8) being activated by corresponding actuation of the actuators (24), wherein in an active state a blade (8) is in a position in which it projects into the crop material passage in such a way that crop material flowing therepast is chopped in cooperation with the cutting edge thereof, then by the blade carrier (27) being moved with the blades (8) activated by means of the setting members (19) into an open state (27_{Öffnung}) and then by the blades (8) being deactivated by actuation of the actuators (24), wherein in a deactivated state a blade is in a position in which it is withdrawn from the crop material passage and therefore does not cut the crop material.

15. A method according to claim 14 **characterised in that** to move the cutting device (16) from the maintenance state (Z_{Wartung}) into the operating state (Z_{Betrieb}) the blades (8) are activated and then the blade carrier (27) is moved into the engagement state (27_{Eingriff}).

## Revendications

1. Machine agricole de récolte, en particulier presse à balles (1) ou remorque autochargeuse, comprenant un équipement de coupe (16) pour du produit agricole de récolte (2), l'équipement de coupe (16) comprenant un porte-couteaux (27) et une pluralité de couteaux (8) qui sont montés mobiles en face de celui-ci et qui, au moyen d'au moins un actionneur (24), sont déplaçables entre une position active, dans laquelle ils pénètrent dans un canal de produit de récolte (9) traversé par du produit de récolte (2), et une position passive, dans laquelle ils sont retirés du canal de produit de récolte (9), le porte-couteaux (27) étant déplaçable, au moyen d'au moins un organe de réglage (19), d'une position engagée (27_{Eingriff}), dans laquelle des couteaux activés (8) pénètrent dans le canal de produit de récolte (9), vers une position ouverte (27_{Öffnung}), qui autorise un accès aux couteaux (8) à des fins de maintenance, **caractérisée par** un équipement de commande (40) qui est exploitable pour commander le au moins un actionneur (24) et le au moins un organe de réglage (19) dans le cadre d'un mode de fonctionnement automatique, de façon que l'équipement de coupe (16) puisse être amené automatiquement d'un état de fonctionnement (Z_{Betrieb}) à un état d'entretien (Z_{Wartung}) ou inversement, lors du passage de l'état de fonctionnement à l'état d'entretien tous les couteaux (8) étant d'abord activés par une commande correspondante des actionneurs (24), un premier nettoyage des fentes de couteaux dans la tôle de fond (20) ayant déjà lieu, après quoi le porte-couteaux (27) est amené, avec les couteaux (8) actifs, dans un état ouvert (27_{Öffnung}) au moyen des organes de réglage (19), la tôle de fond (20) se trouvant dans une position inchangée, ce qui a pour effet, dans l'état d'entretien ouvert (Z_{Wartung}), de libérer une zone se trouvant entre le porte-couteaux abaissé (27_{Öffnung}) et la tôle de fond (20), et les couteaux (8) sont ensuite désactivés par la commande des actionneurs (24).

2. Machine de récolte selon la revendication 1, **caractérisée en ce qu'**à l'équipement de commande (40) est associé un équipement de manoeuvre (40) disposé sur la machine de récolte (1) et accessible à un utilisateur de la machine placé près de la machine de récolte (1).

3. Machine de récolte selon la revendication 1 ou 2, **caractérisée en ce que** l'équipement de commande (40) dispose d'un circuit de sécurité pour protéger l'utilisateur de la machine, de façon qu'un actionnement d'un actionneur (24) ou de l'organe de réglage (19) ne soit possible que lorsque l'entraînement est coupé, en particulier lorsque l'arbre d'entraînement (14) de la machine de récolte (1) est à l'arrêt.

4. Machine de récolte selon la revendication 2 ou 3, **caractérisée en ce que** l'équipement de manoeuvre (40) disposé d'un circuit de sécurité pour protéger l'utilisateur de la machine, de façon qu'un actionnement d'un actionneur (24) ou de l'organe de réglage (19) ne soit possible que lorsque l'utilisateur de la machine touche l'équipement de manoeuvre (40) des deux mains.

5. Machine de récolte selon une des revendications précédentes, **caractérisée en ce que** le porte-couteaux (27) est maintenu par un bâti porteur (21) qui est monté à pivotement par rapport à un bâti de machine (18) de la machine de récolte (1) autour d'un axe (22) s'étendant transversalement au canal de produit de récolte (9) afin d'être mobile entre la position engagée (27_{Eingriff}) et la position ouverte (27_{Öffnung})

6. Machine de récolte selon la revendication 5, **caractérisée en ce que** le porte-couteaux (27) est monté avec une mobilité linéaire par rapport au bâti porteur (21) dans une direction s'étendant transversalement au canal de produit de récolte (9), de sorte que le porte-couteaux (27) est déplaçable à la façon d'un tiroir depuis une position centrale (P_{mittig}) par rapport au canal de produit de récolte (9) vers au moins une position latérale (Pₗᵢₙₖₛ) dans laquelle le porte-couteaux (27) dépasse au moins de moitié hors du canal de produit de récolte (9).

7. Machine de récolte selon une des revendications précédentes, **caractérisée en ce qu'**au porte-couteaux (27) est associé un capteur de position (44) qui est en liaison signalétique avec l'équipement de commande (40) afin que l'équipement de commande (40) n'autorise un actionnement de l'actionneur (24) ou de l'organe de réglage (19) que lorsque le porte-couteaux (27) adopte la position centrale (P_{mittig}).

8. Machine de récolte selon une des revendications précédentes, **caractérisée en ce qu'**à l'équipement de coupe (16) est associé un élément de guidage de produit, en particulier une tôle de fond (20), qui recouvre le canal de produit de récolte (9) vers le bas par rapport au porte-couteaux (27) et dans laquelle une pluralité d'évidements en forme de fentes sont ménagés pour les couteaux disposés sur le porte-couteaux (27).

9. Machine de récolte selon la revendication 8, **caractérisée en ce que** la tôle de fond (20) et le bâti porteur (21) sont montés à pivotement par rapport au bâti de machine (18) de la machine de récolte (1) autour du même axe (22).

10. Machine de récolte selon une des revendications précédentes, **caractérisée en ce que** l'équipement de commande (40) est exploitable dans un mode de fonctionnement manuel dans lequel le au moins un actionneur (24) et/ou l'organe de réglage (19) peuvent être actionnés individuellement par l'intermédiaire d'un équipement de manoeuvre (40).

11. Combinaison d'un véhicule tracteur, en particulier d'un tracteur (30), et d'une machine de récolte (1) tractée par celui-ci selon une des revendications précédentes, à l'équipement de commande (40) étant associé à titre supplémentaire un équipement de manoeuvre (32) disposé dans le véhicule tracteur (30) et accessible à un utilisateur de la machine se servant du véhicule tracteur (30).

12. Combinaison selon la revendication 11, **caractérisée en ce que** le transfert de droits d'accès de l'équipement de manoeuvre (40) disposé sur la machine de récolte (1) à l'équipement de commande (40) et de l'équipement de manoeuvre (32) disposé sur le véhicule tracteur (30) à l'équipement de commande (40) est fonction de l'état d'entraînement de la machine de récolte (1), en particulier de son arbre d'entraînement (14).

13. Combinaison selon la revendication 12 ou 13, **caractérisée en ce que**, lorsque l'entraînement (14) de la machine de récolte (1) est à l'arrêt, l'équipement de manoeuvre (40) disposé sur la machine de récolte (1) a priorité sur l'équipement de manoeuvre (32) disposé sur le véhicule tracteur (30), tandis que lorsque l'entraînement (14) de la machine de récolte (1) est en marche, l'équipement de manoeuvre (32) disposé sur le véhicule tracteur (30) a priorité sur l'équipement de manoeuvre (40) disposé sur la machine de récolte (1) .

14. Procédé d'entretien d'une machine agricole de récolte (1) selon une des revendications précédentes, l'équipement de coupe (16) de celle-ci étant amené d'un état de fonctionnement (Z_{Betrieb}) à un état d'entretien (Z_{Wartung}) par le fait que tous les couteaux (8) sont d'abord activés par une commande correspondante des actionneurs (24), dans un état actif un couteau (8) se trouvant dans une position dans laquelle il pénètre dans le canal de produit de récolte de façon que du produit de récolte qui y passe soit broyé en coopération avec l'arête de coupe de celui-ci, que le porte-couteaux (27) est ensuite déplacé, avec les couteaux (8) actifs, vers un état ouvert (27_{Öffnung}) au moyen des organes de réglage (19), et que les couteaux (8) sont ensuite désactivés par la commande des actionneurs (24), dans un état désactivé un couteau se trouvant dans une position dans laquelle il est retiré du canal de produit de récolte et ne coupe donc pas le produit de récolte.

15. Procédé selon la revendication 14, **caractérisé en ce que**, pour transférer l'équipement de coupe (16) de l'état d'entretien (Z_{Wartung}) à l'état de fonctionnement (Z_{Betrieb}), les couteaux (8) sont activés et le porte-couteaux (27) est ensuite déplacé vers l'état engagé (27_{Eingriff}).
